(19) Europäisches Patentamt / European Patent Office / Office européen des brevets

(11) **EP 3 767 590 A1**

(12) **EUROPEAN PATENT APPLICATION**

(43) Date of publication:
**20.01.2021 Bulletin 2021/03**

(51) Int Cl.:
***G06T 11/00*** *(2006.01)*

(21) Application number: **19187393.4**

(22) Date of filing: **19.07.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Khoreva, Anna
70197 Stuttgart (DE)**
• **Sakmann, Kaspar
1020 Wien (AT)**

(54) **DEVICE AND METHOD FOR TRAINING A GENERATIVE MODEL**

(57)     A device and a method for training a generative model for generating a plurality of synthetic images are disclosed, wherein the method of training a generative model includes: generating a first edge image (212) for a digital image (106), the digital image (106) including at least one object (202), the first edge image (212) including first edge data representing edges of the at least one object (202) in the digital image; a generative model (216) generating a synthetic image (208) including a synthetic version of the at least one object (202); generating a second edge image (214) for the synthetic image (208), the second edge image (208) including second edge data representing edges of the synthetic version of the at least one object (202) in the synthetic image (208); and adapting the generative model (216) based on the first edge image (212) and the second edge image (214).

Fig. 2

EP 3 767 590 A1

**Description**

Various embodiments generally relate to a device and a method for training a generative model.

Image processing and e.g. object recognition and/or image synthesis tend to increase the use of neural networks. For training neural networks, large amounts of data have to be collected. Various generative models are applied to generate new data, such as images showing photorealistic scenes, to mitigate the need for an expensive data collection. The new images may be generated based on images showing photorealistic scenes, which comes with a high computational cost. The new images may be generated based on label images, i.e. semantic images, wherein the label images can be easily created.

In Park et al., Semantic Image Synthesis with Spatially-Adaptive Normalization, arXiv:1903.07291, 2019, a method for semantic image to photorealistic image translation is described.

In Zhu et al., Unpaired Image-to-Image Translation using Cycle-Consistent Adversarial Networks, arXiv:1703.10593, 2018, a method of unpaired image to image translation using a cycle consistent adversarial network (CycleGAN) is described.

In Geirhos et al., ImageNet-trained CNNs are biased towards texture; increasing shape bias improves accuracy and robustness, arXiv:1811.12231, 2019, a bias of neural networks to learn texture rather than shapes is described.

In Maninis et al., Convolutional Oriented Boundaries: From Image Segmentation to High-Level Task, arXiv:1701.04658, 2017, a method of training an edge detection neural network is described.

In Liu et al., Richer Convolutional Features for Edge Detection, arXiv:1612.02103, 2017 a method of training an edge detection neural network is described.

The method and the device with the features of the independent claims 1 (first example) and 9 (fifty-sixth example) enable a generative model to be trained to generate an image with an improved shape representation.

Various embodiments provide a training of a generative model that focuses on object shapes. Edge detection neural networks are capable of classifying edge pixels and non-edge pixels of images.

The digital image may be sensor-detected image. The feature mentioned in this paragraph in combination with the first example provides a second example.

The first edge image may include first edge data representing edges within the at least one object in the digital image. The second edge image may include second edge data representing edges within the synthetic version of the at least one object in the synthetic image. In other words, the first edge image and the second edge image may show boundary edges as well as inner edges of at least one object. The features mentioned in this paragraph in combination with the first example or the second example provide a third.

The generative model may include or may be a generative adversarial network, a variational autoencoder or a flow model. The features mentioned in this paragraph in combination with any one of the first example to the third example provide a fourth example.

The method may further include a sensor detecting the digital image. The sensor may include a camera sensor or a video sensor. The features mentioned in this paragraph in combination with any one of the first example to the fourth example provides a fifth example.

The resolution of the synthetic image may correspond to the resolution of the digital image. In other words, the synthetic image and the digital image may include the same number of pixels. The feature mentioned in this paragraph in combination with any one of the first example to the fifth example provides a sixth example.

The generative model may generate the synthetic image based on a label image. The generative model may generate the synthetic image based on the label image and a random noise vector. The features mentioned in this paragraph in combination with any one of the first example to the sixth example provide a seventh example.

The label image may be generated based on the digital image. The feature mentioned in this paragraph in combination with the seventh example provides an eighth example.

The label image may include a segmentation of the digital image. Each pixel of the label image may be assigned to a respective pixel of the digital image. Each pixel of the label image may include an assigned class of a plurality of classes. In other words, the label image may be a segmentation of the objects shown in the digital image, i.e. the label image may be a semantic image. The features mentioned in this paragraph in combination with any one of the seventh example or the eighth example provide a ninth example.

The label image may be provided by a segmentation neural network. The feature mentioned in this paragraph in combination with any one of the seventh example to the ninth example provides a tenth example.

The first edge image and the second edge image may be generated by an edge filter. The feature mentioned in this paragraph in combination with any one of the first example to the tenth example provides an eleventh example.

The first edge image and the second edge image may be generated by an edge detection neural network. The feature mentioned in this paragraph in combination with any one of the first example to the tenth example provides a twelfth example.

Generating a first edge image may include generating a first edge detection output by the edge detection neural network based on the digital image and generating the first edge image based on the first edge detection output using a sigmoid function. The features mentioned in this paragraph in combination with the twelfth example provides a thirteenth example.

The first edge detection output may include a first plurality of side outputs and a first fused output. The first edge detection output may include a first side output, a second side output, and a first fused output. The features mentioned in this paragraph in combination with the thirteenth example provides a fourteenth example.

The resolution of the first side output of the first edge detection output may correspond to the resolution of the digital image. The feature mentioned in this paragraph in combination with the fourteenth example provides a fifteenth example.

The resolution of the second side output of the first edge detection output may be smaller than the resolution of the digital image. The feature mentioned in this paragraph in combination with the fourteenth example or the fifteenth example provides a sixteenth example.

The resolution of the second side output of the first edge detection output may correspond to half the resolution of the digital image. The feature mentioned in this paragraph in combination with the sixteenth example provides a seventeenth example.

The first fused output may be generated based on the first side output of the first edge detection output and the second side output of the first edge detection output. The feature mentioned in this paragraph in combination with any one of the fifteenth example to the seventeenth example provides an eighteenth example.

Generating the first fused output may include generating a modified second side output of the first edge detection output, wherein the resolution of the modified second side output may correspond to the resolution of the digital image. This has the effect, that the modified second side output and the first side output have the same resolution. Generating the first fused output may further include generating the first fused output based on the first side output of the first edge detection output and the modified second side output of the first edge detection output. The features mentioned in this paragraph in combination with the eighteenth example provide a nineteenth example.

Generating the first fused output may include adding the first side output of the first edge detection output and the modified second side output of the first edge detection output. The feature mentioned in this paragraph in combination with the nineteenth example provides a twentieth example.

The first edge image may be generated based on the first fused output using the sigmoid function. The feature mentioned in this paragraph in combination with any one of the thirteenth example to the twentieth example provides a twenty-first example.

The first edge detection output may further include a first side edge image and/or a second side edge image. The features mentioned in this paragraph in combination with any one of the fourteenth example to the twenty-first example provides a twenty-second example.

The first side edge image of the first edge detection output may be generated based on the first side output of the first edge detection output using the sigmoid function. The second side edge image of the first edge detection output may be generated based on the second side output of the first edge detection output using the sigmoid function. The features mentioned in this paragraph in combination with the twenty-second example provides a twenty-third example.

Generating the second edge image may include generating a second edge detection output by the edge detection neural network based on the synthetic image and generating the second edge image based on the second edge detection output using the sigmoid function. The feature mentioned in this paragraph in combination with any one of the thirteenth example to the twenty-third example provides a twenty-fourth example.

The second edge detection output may include a second plurality of side outputs and a second fused output. The second edge detection output may include a first side output, a second side output, and a second fused output. The features mentioned in this paragraph in combination with the twenty-fourth example provide a twenty-fifth example.

The resolution of the first side output of the second edge detection output may correspond to the resolution of the synthetic image. The feature mentioned in this paragraph in combination with the twenty-fifth example provides a twenty-sixth example.

The resolution of the second side output of the second edge detection output may be smaller than the resolution of the synthetic image. The feature mentioned in this paragraph in combination with the twenty-fifth example or the twenty-sixth example provides a twenty-seventh example.

The resolution of the second side output of the second edge detection output may correspond to half the resolution of the synthetic image. The feature mentioned in this paragraph in combination with the twenty-seventh example provides a twenty-eighth example.

The second fused output may be generated based on the first side output of the second edge detection output and the second side output of the second edge detection output. The feature mentioned in this paragraph in combination with any one of the twenty-fifth example to the twenty-eighth example provides a twenty-ninth example.

Generating the second fused output may include generating a modified second side output of the second edge detection output, wherein the resolution of the modified second side output may correspond to the resolution of the synthetic image. Generating the second fused output may further include generating the second fused output based on the first side output of the second edge detection output and the modified second side output of the second edge detection output. The features mentioned in this paragraph in combination with the twenty-ninth example provide a thirtieth example.

Generating the second fused output may include adding the first side output of the second edge detection output and the modified second side output of the second edge detection output. The feature mentioned in this paragraph in combination the thirtieth example provides a thirty-first example.

The second edge image may be generated based on the second fused output using the sigmoid function. The feature mentioned in this paragraph in combination with any one of the twenty-fifth example to the thirty-first example provides a thirty-second example.

The second edge detection output may further include a first side edge image and/or a second side edge image. The features mentioned in this paragraph in combination with any one of the twenty-fifth example to the thirty-second example provides a thirty-third example.

The first side edge image of the second edge detection output may be generated based on the first side output of the second edge detection output using the sigmoid function. The second side edge image of the second edge detection output may be generated based on the second side output of the second edge detection output using the sigmoid function. The features mentioned in this paragraph in combination with the thirty-third example provides a thirty-fourth example.

Adapting the generative model may include adapting the generative model by comparing the first edge image with the second edge image. This has the effect, that the trained generative model focuses on shapes of objects rather than textures. The feature mentioned in this paragraph in combination with any one of the first example to the thirty-fourth example provides a thirty-fifth example.

Comparing the first edge image with the second edge image may include determining a first edge loss. The first edge loss may be determined based on a loss function, wherein the loss function may include a binary cross-entropy function. Using a binary cross-entropy function has the effect, that a huge imbalance between edge pixels and non-edge pixels can be easily adjusted. The features mentioned in this paragraph in combination with the thirty-fifth example provide a thirty-sixth example.

Adapting the generative model may include adapting the generative model by comparing the first side edge image of the first edge detection output with the first side edge image of the second edge detection output and comparing the second side edge image of the first edge detection output with the second side edge image of the second edge detection output. The features mentioned in this paragraph in combination with the thirty-third example or the thirty-fourth example provide a thirty-seventh example.

Comparing the first side edge image of the first edge detection output with the first side edge image of the second edge detection output and comparing the second side edge image of the first edge detection output with the second side edge image of the second edge detection output may include determining a second edge loss. Determining the second edge loss may include adding an edge loss, which is determined by comparing the first side edge image of the first edge detection output with the first side edge image of the second edge detection output, and an edge loss, which is determined by comparing the second side edge image of the first edge detection output with the second side edge image of the second edge detection output. The features mentioned in this paragraph in combination with the thirty-seventh example provide a thirty-eighth example.

Adding the edge loss, which is determined by comparing the first side edge image of the first edge detection output with the first side edge image of the second edge detection output, and the edge loss, which is determined by comparing the second side edge image of the first edge detection output with the second side edge image of the second edge detection output may include adding by using a weighted sum. The feature mentioned in this paragraph in combination with the thirty-eighth example provides a thirty-ninth example.

The second edge loss may be determined based on a loss function. The loss function to determine the second edge loss may include a binary cross-entropy function. The features mentioned in this paragraph in combination with the thirty-eighth example or the thirty-ninth example provide a fortieth example.

Adapting the generative model may include adapting the generative model by comparing the first fused output with the second fused output. The feature mentioned in this paragraph in combination with any one of the twenty-fifth example to the thirty-fourth example provides a forty-first example.

Comparing the first fused output with the second fused output may include determining a third edge loss. The third edge loss may be determined based on a loss function. The loss function to determine the third edge loss may include an L1-norm loss function, an L2-norm loss function, or a p-norm loss function. Using an L1-norm or an L2-norm has the effect, that sparsity can be promoted and the robustness to outliers can be increased. The features mentioned in this paragraph in combination with the forty-first example provide a forty-second example.

Adapting the generative model may include adapting the generative model by comparing the first side output of the first edge detection output with the first side output of the second edge detection output and comparing the modified second side output of the first edge detection output with the modified second side output of the second edge detection output. The feature mentioned in this paragraph in combination with any one of the thirtieth example to the thirty-fourth example provides a forty-third example.

Comparing the first side output of the first edge detection output with the first side output of the second edge detection output and comparing the modified second side output of the first edge detection output with the modified second side output of the second edge detection output may include determining a fourth edge loss. Determining the fourth edge loss may include adding an edge loss, which is determined by comparing the first side output of the first edge detection output with the first side output of the second edge detection output, and an edge loss, which is determined by comparing the modified second side output of the first edge detection output with the modified second side output of the second edge detection output. The features mentioned in this paragraph in combination with the forty-third example provide a forty-fourth example.

Adding the edge loss, which is determined by comparing the first side output of the first edge detection output with the first side output of the second edge detection output, and the edge loss, which is determined by comparing the modified second side output of the first edge detection output with the modified second side output of the second edge detection output may include adding using a weighted sum. The features mentioned in this paragraph in combination with the forty-fourth example provide a forty-fifth example.

The fourth edge loss may be determined based on a loss function. The loss function to determine the fourth edge loss may include an L1-norm loss function, an L2-norm loss function, or a p-norm loss function. The features mentioned in this paragraph in combination with the forty-fifth example provide a forty-sixth example.

The generative model may include a generative adversarial network. The generative adversarial network may include a generator and a discriminator. The method may further include determining a generator loss and a discriminator loss based on the digital image and the synthetic image. The method may include adapting the generator based on the generator loss and based on the first edge loss, the second edge loss, the third edge loss, or the fourth edge loss. The method may further include adapting the discriminator based on the discriminator loss. The features mentioned in this paragraph in combination with any one of the first example to the forty-sixth example provide a forty-seventh example.

The synthetic image may be generated based on a label image. The generator loss and the discriminator loss may be determined based on the digital image, the synthetic image, and the label image. The features mentioned in this paragraph in combination with the forty-seventh example provide a forty-eighth example.

The generator loss and the discriminator loss may be determined by the discriminator. The feature mentioned in this paragraph in combination with the forty-seventh example or the forty-eighth example provides a forty-ninth example.

The generative model may include a cycle consistent generative adversarial network (CycleGAN). The synthetic image may be a reconstruction of the digital image. The method may further include generating a third edge image for a second label image. The second label image may include at least one object. The third edge image may include third edge data representing edges of the at least one object in the second label image. The method may include the generating a third label image by the generative model, wherein the third label image may be a reconstruction of the second label image. The method may include generating a fourth edge image for the third label image. The fourth edge image may include fourth edge data representing edges of the at least one object in the third label image. The method may further include adapting the generative model based on the third edge image and the fourth edge image. This has the effect, that the generative model can be trained using unpaired sets of images. In other words, no correlation between label images and digital images is necessary to train the generative model. The features mentioned in this paragraph in combination with any one of the first example to the forty-ninth example provide a fiftieth example.

The third edge data may represent edges within the at least one object on the second label image. The fourth edge data may represent edges within the at least one object in the third label image. The features mentioned in this paragraph in combination the fiftieth example provides a fifty-first example.

At least a part of the generative model may be implemented by one or more processors. The feature mentioned in this paragraph in combination with any one of the first example to the fifty-first example provides a fifty-second example.

At least a part of the edge detection neural network may be implemented by one or more processors. The feature mentioned in this paragraph in combination with any one of the first example to the fifty-second example provides a fifty-third example.

The method may further include that the generative model generates training data. The feature mentioned in this paragraph in combination with any one of the first example to the fifty-third example provides a fifty-fourth example.

The method may further include a training of a further model using the training data generated by the generative model. The feature mentioned in this paragraph in combination with the fifty-fourth example provides a fifty-fifth example.

The method may further include the trained generative model controlling an actor. The feature mentioned in this paragraph in combination with the fifty-fifth example provides a fifty-sixth example.

A computer program may include program instructions configured to, if executed by one or more processors, perform the method of any one of the first example to the fifty-sixth example. The feature mentioned in this paragraph provides a fifty-seventh example.

The computer program may be stored in a machine-parsable storage media. The feature mentioned in this paragraph in combination with the fifty-seventh example provides a fifty-eighth example.

An image processing device may be configured to perform the method of any one of the first example to the fifty-sixth example. The feature mentioned in this paragraph provides a fifty-ninth example.

An image processing device may include a generative model, wherein the generative model may be trained by the method of any one of the first example to the fifty-sixth example. The feature mentioned in this paragraph provides a sixtieth example.

Various embodiments of the invention are described with reference to the following drawings, in which:

Figure 1              shows a device according to various embodiments;

Figure 2              shows a processing system for training a generative model according to various embodiments;

Figure 3              shows a processing system for providing a label image according to various embodiments;

Figure 4A             shows a processing system for training a generative model according to various embodiments;

Figure 4B             shows a processing system for training a generative model according to various embodiments;

Figure 4C             shows a processing system for training a generative model according to various embodiments;

Figure 4D             shows a processing system for training a generative model according to various embodiments;

Figure 5              shows a method of training a generative model according to various embodiments;

Figure 6              shows a processing system for training a generative adversarial network according to various embodiments;

Figures 7A and 7B     show a processing system for training a cycle consistent generative adversarial network according to various embodiments;

Figure 8              shows a processing system for using a trained generative model according to various embodiments.

In an embodiment, a "circuit" may be understood as any kind of a logic implementing entity, which may be hardware, software, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be software being implemented or executed by a processor, e.g. any kind of computer program, e.g. a computer program using a virtual machine code such as e.g. Java. Any other kind of implementation of the respective functions which will be described in more detail below may also be understood as a "circuit" in accordance with an alternative embodiment.

Various embodiments relate to a device and a method of training a generative model with the result that the trained generative model is capable of translating a label image to a synthetic image showing a photorealistic scene, wherein the synthetic image represents shapes in an improved manner. In other words, the trained generative model can capture salient strokes within a label image translating them to the synthetic image. Thus, illustratively, it may now be possible to generate images showing photorealistic scenes with clearly defined shapes.

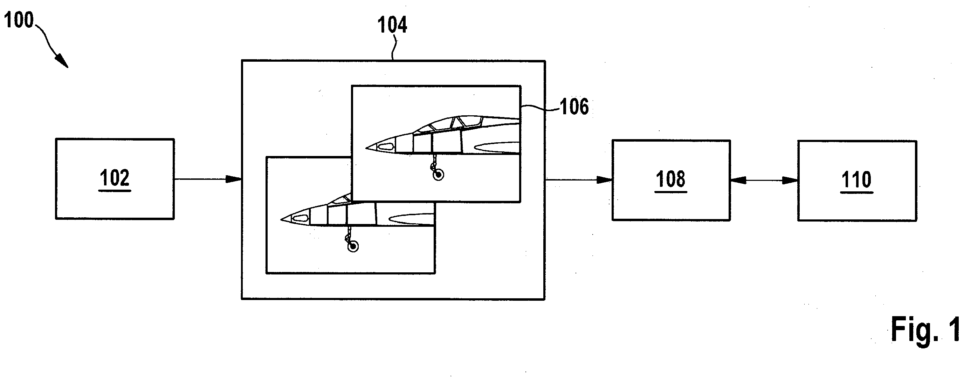

**FIG. 1** shows a device 100 according to various embodiments. The device 100 may include one or more sensors 102. The sensor 102 may be configured to provide (digital) imaging data 104, such as one or more digital images 106. The sensor 102 may be configured to detect the digital image 106, i.e. the digital image 106 may be a sensor-detected image. The sensor 102 may be any kind of sensor, which is capable of providing (digital) imaging data. The sensor 102 may be an imaging sensor. The imaging sensor may be a camera sensor or a video sensor. The plurality of sensors may be of the same type of sensor or of different sensor types. The device 100 may further include a memory device 108. The memory device 108 may include a memory, which is for example used in the processing carried out by a processor. A memory used in the embodiments may be a volatile memory, for example a DRAM (Dynamic Random Access Memory) or a nonvolatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory). The memory device 108 may be configured to store the imaging data 104 provided by the one or more sensors 102. The device 100 may further include at least one processor 110. The at least one processor 110 may be any kind of circuit, i.e. any kind of logic implementing entity, as described above. In various embodiments, the processor 110 may be configured to process the imaging data 104.

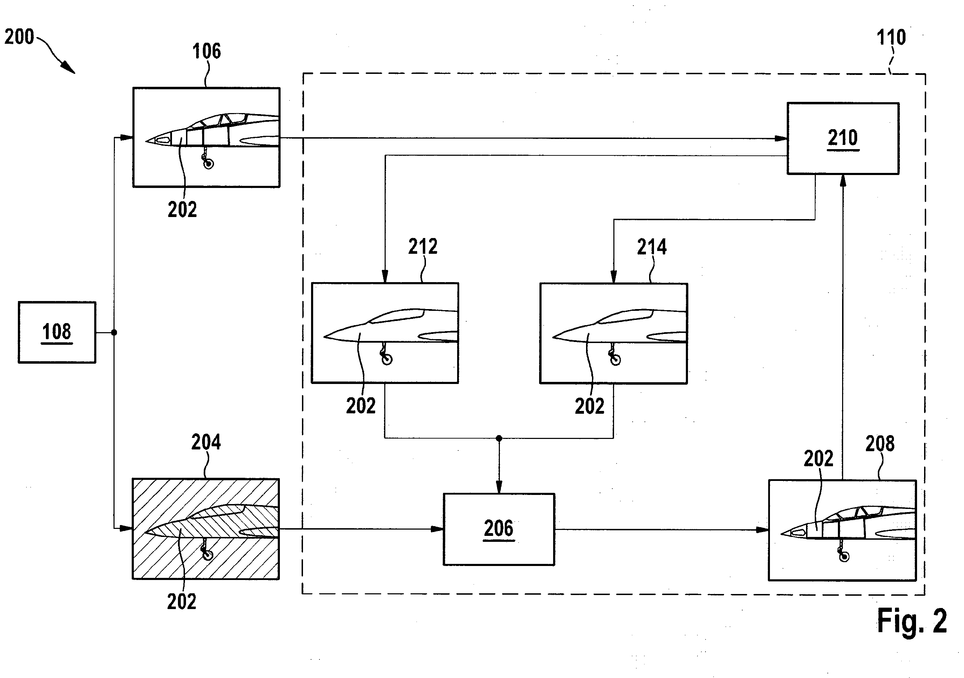

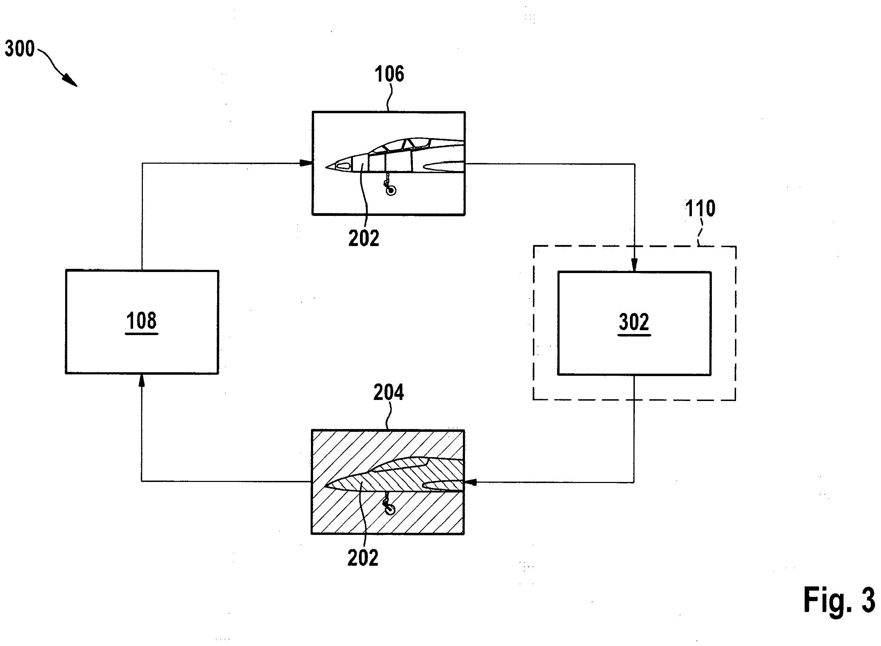

**FIG.2** shows a processing system 200 for training a generative model according to various embodiments. The processing system 200 may include the memory device 108, wherein the memory device 108 may store the imaging data 104, such as the digital image 106. The digital image 106 may include at least one object 202. The memory device 108 may further store label data, such as a label image 204. The label image 204 may include a segmentation of a digital image, such as the digital image 106. The label image 204 may be provided by a segmentation neural network (not shown in FIG. 2). **FIG. 3** shows a processing system 300 for providing a label image according to various embodiments. The processing system 300 may include the memory device 108, wherein the memory device 108 may store the digital image 106. The processing system 300 may further include the at least one processor 110. The processor 110 may be configured to implement at least a part of a segmentation neural network 302. The segmentation neural network 302 may be configured to process the digital image 106 and may be further configured to provide the label image 204, wherein the label image 204 may include a segmentation of the digital image 106. Each pixel of the label image 204 may be assigned to a respective pixel of the digital image 106 and each pixel of the label image 204 may include an assigned class of a plurality of classes. The memory device 108 may be configured to store the label image 204 provided by the segmentation neural network 302.

In various embodiments, the label image 204 may be generated by applying one or more edge filters to the digital image 106.

As shown in **FIG. 2,** the processing system 200 may include the at least one processor 110. The processor 110 may be configured to implement at least a part of a generative model 206. The generative model 206 may be a generative adversarial network, a variational autoencoder or a flow model, or the like. The generative model 206 may be configured to generate a plurality of synthetic images. The generative model 206 may be configured to generate a synthetic image 208. The synthetic image 208 may include a synthetic version of the at least one object 202 shown in the digital image 106. The resolution of the synthetic image 208 may correspond to the resolution of the digital image 106 (for example 2048x2048 pixels, for example 1024x1024 pixels). The generative model 206 may be configured to generate the synthetic image 208 based on the label image 204. According to various embodiments the generative model 206 is configured to process the label image 204 and to generate the synthetic image 208 based on the label image 204 and a random noise vector.

The processor 110 may be further configured to implement at least a part of an edge filter or at least a part of an edge detection neural network 210. According to various embodiments, the processor 110 is configured to extract edges from consecutive frames in a video b extracting motion/depth boundaries.

The edge detection neural network 210 may be configured to process an image and to provide an edge image based on the processed image. The edge detection neural network 210 may be configured to process the digital image 106. The edge detection neural network 210 may be configured to provide a first edge image 212 based on the digital image 106. The first edge image 212 may include first edge data representing edges of the at least one object 202 in the digital image 106. The first edge data may further represent edges within the at least one object 202 in the digital image 106. The edge detection neural network 210 may be configured to process the synthetic image 208. The edge detection neural network 210 may be configured to provide a second edge image 214 based on the synthetic image 208. The second edge image 214 may include second edge data representing edges of the synthetic version of the at least one object 202 in the synthetic image 208. The second edge data may further represent edges within the synthetic version of the at least one object 202 in the synthetic image 208. The processor 110 may be configured to adapt the generative model 206 based on an output provided by the edge detection neural network 210. The processor 110 may be configured to adapt the generative model 206 based on the first edge image 212 and the second edge image 214.

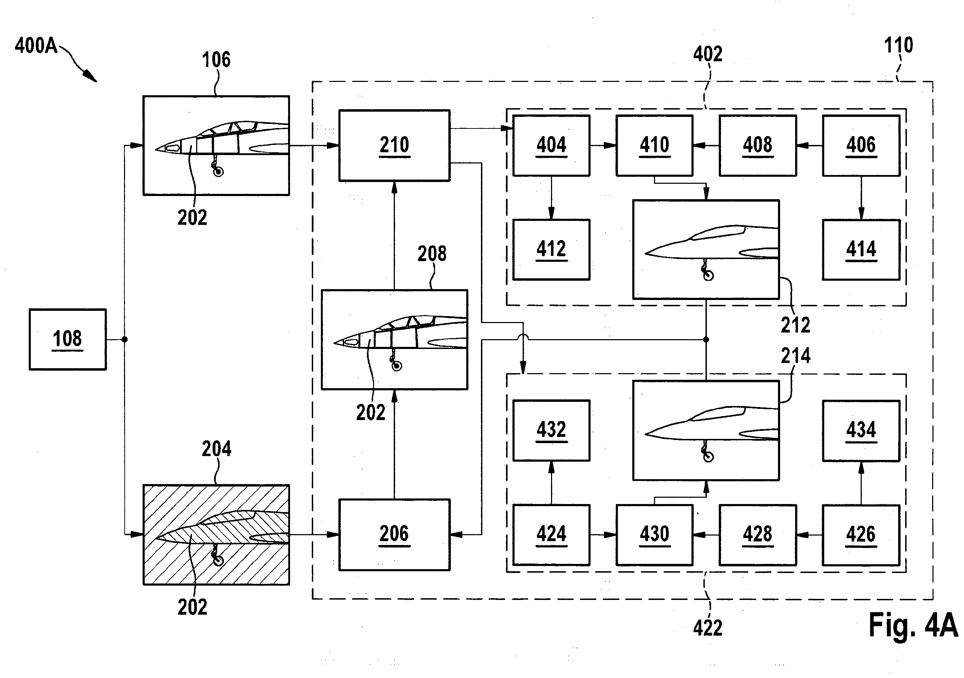

**FIG. 4A** shows a processing system 400A for training a generative model 206 according to various embodiments. The processing system 400A may correspond substantially to the processing system 200, wherein the edge detection neural network 210 may be configured to provide a first edge detection output 402 based on the digital image 106, and wherein the edge detection neural network 210 may be further configured to provide a second edge detection output 422 based on the synthetic image 208.

A generative model $G$ (see formula (1)) may be configured to process a label image $y$ and to provide a synthetic image $\hat{x}$, wherein the generative model $G$ may be the generative model 206, wherein the label image $y$ may be the label image 204, and wherein the synthetic image $\hat{x}$ may be the synthetic image 208.

The label image $y$ may be based on the digital image $x$, wherein the digital image $x$ may be the digital image 106:

$$\hat{x} = G(y). \tag{1}$$

The first edge detection output 402 may include a plurality of side outputs. The first edge detection output 402 may include a first side output 404 and a second side output 406. The resolution of the first side output 404 of the first edge detection output 402 may correspond to the resolution of the digital image 106 (for example 2048x2048 pixels, for example 1024x1024 pixels). The resolution of the second side output 406 of the first edge detection output 402 may be smaller than the resolution of the digital image 106. The resolution of the second side output 406 of the first edge detection output 402 may be half the resolution of the digital image 106 (for example 1024x1024 pixels for a resolution of the digital image 106 of 2048x2048, for example 512x512 pixels for a resolution of the digital image 106 of 1024x1024 pixels). The first edge detection output 402 may further include a first fused output 410. The first fused output 410 may be generated based on the first side output 404 of the first edge detection output 402 and the second side output 406 of the first edge detection output 402. The first fused output 410 may be generated based on the first side output of the first edge detection output 402 and a modified second side output 408 of the first edge detection output 402, wherein the modified second side output 408 may be based on the second side output of the first edge detection output 402. The resolution of the modified second side output 408 of the first edge detection output 402 may correspond to the resolution of the digital image 106. In other words, the modified second side output 408 of the first edge detection output 402 may be an upsampled version of the second side output 406 of the first edge detection output 402.

The first fused output 410 may include adding the first side output 404 and the modified second side output 408 of the first edge detection output 402 and may be described by formula (2) wherein $e_1(x)$ is the first side output, $e_2(x)$ is the second side output of the first edge detection output 402, and $e(x)$ is the first fused output 410:

$$e(x) = e_1(x) + e_2(x). \qquad (2)$$

The first edge image 212 may be generated based on the first fused output 410. The first edge image 212 (given by $E$) may be generated based on the first fused output 410 using a sigmoid function $\sigma$ (see formula (3)). The sigmoid function may map the values of the first fused output 410, i.e. the value of each pixel of the first fused output 410, to a range from "0" to "1" (it is to be noted that any other function which is similar to the sigmoid function may also be used in various embodiments, such as e.g. a tanh function):

$$E = \sigma\big(e(x)\big). \qquad (3)$$

The first edge detection output 402 may further include a first side edge image 412, wherein the first side edge image 412 (given by $E_1$) may be generated based on the first side output 404 of the first edge detection output 402 using the sigmoid function $\sigma$ (see formula (4)). The first edge detection output 402 may further include a second side edge image 414, wherein the second side edge image 414 (given by $E_2$) may be generated based on the second side output 406 of the first edge detection output 402 using the sigmoid function $\sigma$ (see formula (5)):

$$E_1 = \sigma\big(e_1(x)\big); \qquad (4)$$

$$E_2 = \sigma\big(e_2(x)\big). \qquad (5)$$

The second edge detection output 422 may include a plurality of side outputs. The second edge detection output 422 may include a first side output 424 and a second side output 426. The resolution of the first side output 424 of the second edge detection output 422 may correspond to the resolution of the synthetic image 208 (for example 2048x2048 pixels, for example 1024x1024 pixels). The resolution of the second side output 426 of the second edge detection output 422 may be smaller than the resolution of the synthetic image 208. The resolution of the second side output 426 of the second edge detection output 422 may be half the resolution of the synthetic image 208 (for example 1024x1024 pixels for a resolution of the synthetic image 208 of 2048x2048, for example 512x512 pixels for a resolution of the synthetic image 208 of 1024x1024 pixels). The second edge detection output 422 may further include a second fused output 430. The second fused output 430 may be generated based on the first side output 424 of the second edge detection output 422 and the second side output 426 of the second edge detection output 422. The second fused output 430 may be generated based on the first side output of the second edge detection output 422 and a modified second side output 428 of the second edge detection output 422, wherein the modified second side output 428 may be based on the second side output of the second edge detection output 422. The resolution of the modified second side output 428 of the second edge detection output 422 may correspond to the resolution of the synthetic image 208. In other words, the modified second side output 428 of the second edge detection output 422 may be an upsampled version of the second side output 426 of the second edge detection output 422.

The second fused output 430 may include adding the first side output 424 and the modified second side output 428 of the second edge detection output 422 and may be described by formula (6) wherein $e_1(\hat{x})$ is the first side output, $e_2(\hat{x})$ is the second side output of the second edge detection output 422, and $e(\hat{x})$ is the second fused output:

$$e(\hat{x}) = e_1(\hat{x}) + e_2(\hat{x}). \tag{6}$$

The second edge image 214 may be generated based on the second fused output 430. The second edge image 214 (given by $\hat{E}$) may be generated based on the second fused output 430 using the sigmoid function $\sigma$ (see formula (7)):

$$\hat{E} = \sigma(e(\hat{x})). \tag{7}$$

The second edge detection output 422 may further include a first side edge image 432, wherein the first side edge image 432 (given by $\hat{E}_1$) may be generated based on the first side output 424 of the second edge detection output 422 using the sigmoid function $\sigma$ (see formula (8)). The second edge detection output 422 may further include a second side edge image 434, wherein the second side edge image 434 (given by $\hat{E}_2$) may be generated based on the second side output 426 of the second edge detection output 422 using the sigmoid function $\sigma$ (see formula (9)):

$$\hat{E}_1 = \sigma(e_1(\hat{x})); \tag{8}$$

$$\hat{E}_2 = \sigma(e_2(\hat{x})). \tag{9}$$

The processor 110 may be configured to adapt the generative model 206 based on the first edge image 212 and the second edge image 214. The generative model 206 may be adapted by comparing the first edge image 212 with the second edge image 214. Comparing the first edge image 212 with the second edge image 214 may include determining a first edge loss. In other words, the processor 110 may be configured to determine a first edge loss based on the first edge image 212 and the second edge image 214. The first edge loss may be determined based on a loss function. The first edge loss (given by $L_{BCE1}$) may be determined by a binary cross-entropy function (see formula (10)).

$$L_{BCE1} = - < \sum_{m=1}^{n_{classes}} \{ \beta_+^m \sum_{edge\ pixels} E \log(\hat{E}) \} + \sum_{m=1}^{n_{classes}} \{ \beta_-^m \sum_{non-edge\ pixels} (1 - E) \log(1 - \hat{E}) \} >_{x \sim p_{data}(x)} \tag{10}$$

wherein:

$<.>_{x \sim p_{data}(x)}$ denotes the expectation value over x and is given by formula (11);

$\beta_+^m$ is the weight of the edge pixels and is given by formula (12);

$\beta_-^m$ is the weight of the non-edge pixels and is given by formula (13);

$$<.>_{x \sim p_{data}(x)} = \frac{1}{N} \sum_{i=1}^{N} (.); \tag{11}$$

$$\beta_+^m = \frac{n_-^m}{n_+^m + n_-^m}; \tag{12}$$

$$\beta_-^m = \frac{n_+^m}{n_+^m + n_-^m}; \tag{13}$$

wherein:

N is the number of a plurality of digital images or a plurality of synthetic images;

$n_+^m$ is the number of edge pixels per class m; and

$n_-^m$ is the number of non-edge pixels per class m.

Using the weights $\beta_+^m$ and $\beta_-^m$ has the effect that edge pixels and non-edge pixels contribute equally to the first edge loss.

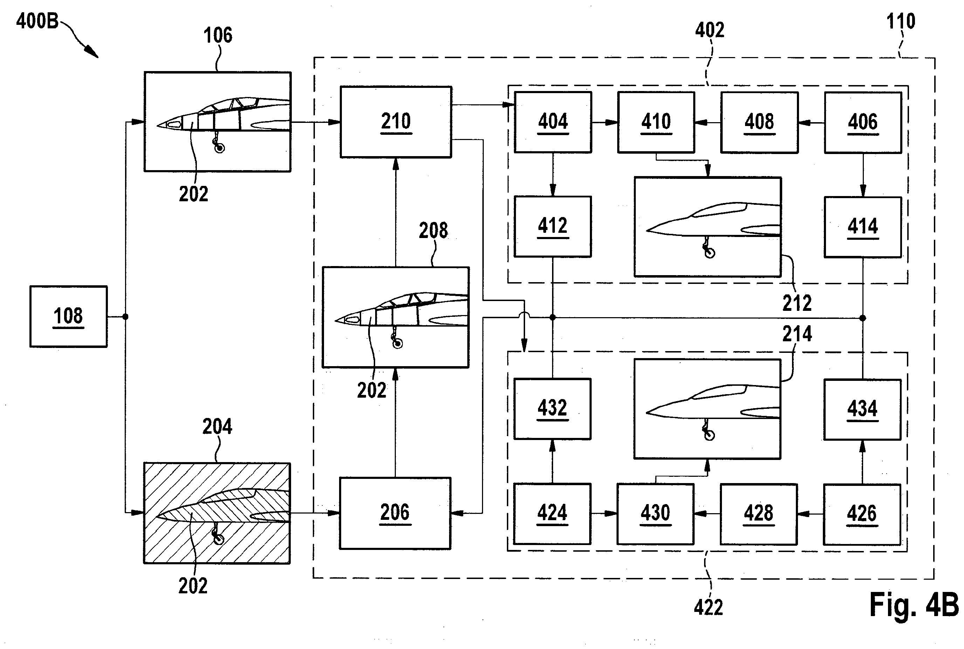

**FIG. 4B** shows a processing system 400B for training a generative model 206 according to various embodiments. The processing system 400B may correspond substantially to the processing system 400A, wherein the processor 110 is configured to adapt the generative model 206 based on the first side edge image 412 of the first edge detection output 402, the second side edge image 414 of the first edge detection output 402, the first side edge image 432 of the second edge detection output 422, and the second side edge image 434 of the second edge detection output 422. The generative model 206 may be adapted by comparing the first side edge image 412 of the first edge detection output 402 with the first side edge image 432 of the second edge detection output 422 and comparing the second side edge image 414 of the first edge detection output 402 with the second side edge image 434 of the second edge detection output 422. Comparing the first side edge image 412 of the first edge detection output 402 with the first side edge image 432 of the second edge detection output 422 and comparing the second side edge image 414 of the first edge detection output 402 with the second side edge image 434 of the second edge detection output 422 may include determining a second edge loss. In other words, the processor 110 may be configured to determine a second edge loss based on the first side edge image 412 of the first edge detection output 402, the second side edge image 414 of the first edge detection output 402, the first side edge image 432 of the second edge detection output 422, and the second side edge image 434 of the second edge detection output 422.

The second edge loss may be determined based on a loss function. The second edge loss (given by $L_{BCE2}$) may be determined by a binary cross-entropy function. According to various embodiments, the binary cross-entropy function given by formula (10) is solved for the first side edge image 412 ($E_1$) of the first edge detection output 402 and the first side edge image 432 ($\hat{E}_1$) of the second edge detection output 422 giving an edge loss $L_{BCE2-1}$ and the binary cross-entropy function given by formula (10) is further solved for the second side edge image 414 ($E_2$) of the first edge detection output 402 and the second side edge image 434 ($\hat{E}_2$) of the second edge detection output 422 giving an edge loss $L_{BCE2-2}$. The second edge loss may include adding the edge loss, which is determined by comparing the first side edge image 412 of the first edge detection output 402 with the first side edge image 432 of the second edge detection output 422, and the edge loss, which is determined by comparing the second side edge image 414 of the first edge detection output 402 with the second side edge image 434 of the second edge detection output 422. In other words, the second edge loss may include adding the edge loss $L_{BCE2-1}$ and the edge loss $L_{BCE2-2}$.

The second edge loss $L_{BCE2}$ may include a weighted sum of the edge loss $L_{BCE2-1}$ and the edge loss $L_{BCE2-2}$ (formula (14)), wherein *A1* and *A2* are the respective weighing factors:

$$L_{BCE2} = A1\, L_{BCE2-1} + A2\, L_{BCE2-2}. \qquad (14)$$

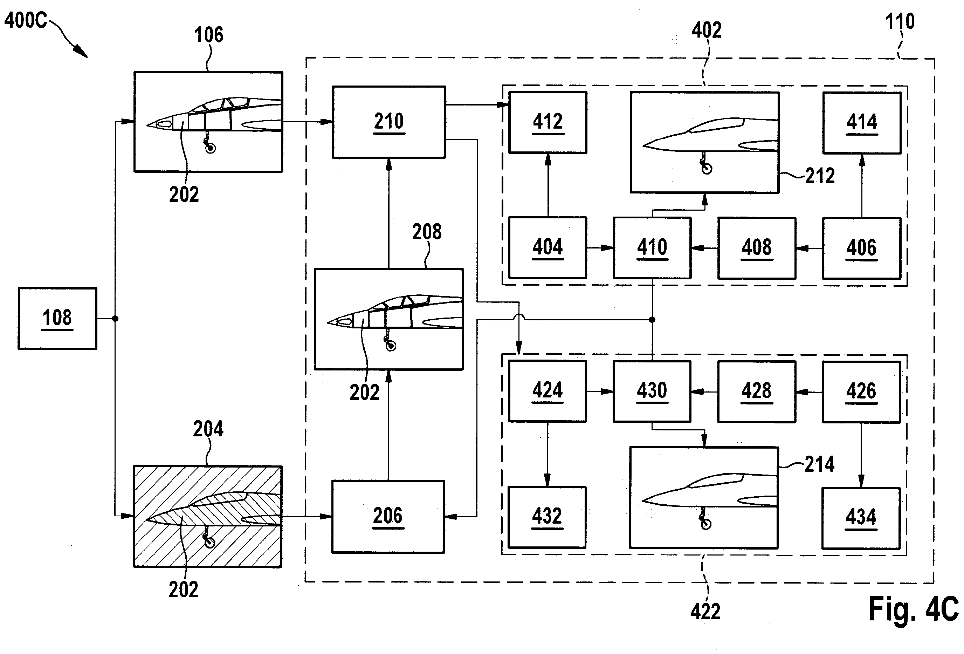

**FIG.** 4C shows a processing system 400C for training a generative model 206 according to various embodiments. The processing system 400C may correspond substantially to the processing system 400A or the processing system 400B, wherein the processor 110 is configured to adapt the generative model 206 based on the first fused output 410 and the second fused output 430. The generative model 206 may be adapted by comparing the first fused output 410 with the second fused output 430. Comparing the first fused output 410 with the second fused output 430 may include determining a third edge loss. In other words, the processor 110 may be configured to determine a third edge loss based on the first fused output 410 and the second fused output 430.

The third edge loss may be determined based on a loss function. The third edge loss may be determined by an L1-norm loss function, an L2-norm loss function or a p-norm loss function. According to various embodiments, the third edge loss ($L1_3$) is determined by the L1-norm loss function based on the first fused output 410 ($e(x)$) and the second fused output 430 ($e(\hat{x})$) (see formula (15)).

$$L1_3 = \langle ||e(x) - e(\hat{x})||_1 \rangle_{x \sim p_{data}(x)}. \qquad (15)$$

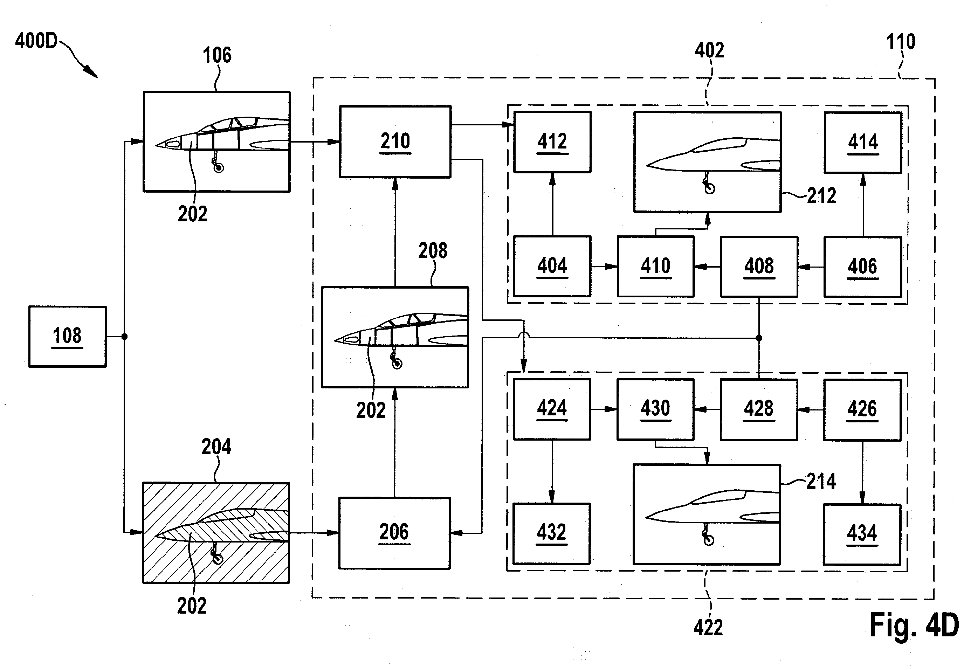

**FIG. 4D** shows a processing system 400D for training a generative model 206 according to various embodiments. The processing system 400D may correspond substantially to the processing system 400A, the processing system 400B or the processing system 400C, wherein the processor 110 is configured to adapt the generative model 206 based on the first side output 404 of the first edge detection output 402, the modified second side output 408 of the first edge detection output 402, the first side output 424 of the second edge detection output 422, and the modified second side output 428 of the second edge detection output 422. The generative model 206 may be adapted by comparing the first side output 404 of the first edge detection output 402 with the first side output 424 of the second edge detection output 422 and comparing the modified second side output 408 of the first edge detection output 402 with the modified second side output 428 of the second edge detection output 422. Comparing the first side output 404 of the first edge detection output 402 with the first side output 424 of the second edge detection output 422 and comparing the modified second side output 408 of the first edge detection output 402 with the modified second side output 428 of the second edge detection output 422 may include determining a fourth edge loss. In other words, the processor 110 may be configured to determine a fourth edge loss based on the first side output 404 of the first edge detection output 402, the modified second side output 408 of the first edge detection output 402, the first side output 424 of the second edge detection output 422, and the modified second side output 428 of the second edge detection output 422.

The fourth edge loss may be determined based on a loss function. The fourth edge loss may be determined by an L1-norm loss function, an L2-norm loss function or a p-norm loss function. According to various embodiments, the fourth edge loss is determined by an L1-norm loss function, wherein the L1-norm loss function given in formula (15) may be solved for the first side output 404 ($e_1(x)$) of the first edge detection output 402 and the first side output 424 ($e_1(\hat{x})$) of the second edge detection output 422 giving an edge loss $L1_{4-1}$ and the L1-norm loss function given in formula (15) may be further solved for the modified second side output 408 ($\ddot{e}_2(x)$) of the first edge detection output 402 and the modified second side output 428 ($\ddot{e}_2(\hat{x})$) of the second edge detection output 422 giving an edge loss $L1_{4-2}$. The modified second side output 408 ($\ddot{e}_2(x)$) of the first edge detection output 402 may be the upsampled version of the second side output 406 ($e_2(x)$) of the first edge detection output 402. The modified second side output 428 ($\ddot{e}_2(\hat{x})$) of the second edge detection output 422 may be the upsampled version of the second side output 426 ($e_2(\hat{x})$) of the second edge detection output 422. The fourth edge loss may include adding the edge loss, which is determined by comparing the first side output 404 of the first edge detection output 402 with the first side output 424 of the second edge detection output 422, and the edge loss, which is determined by comparing the modified second side output 408 of the first edge detection output 402 with the modified second side output 428 of the second edge detection output 422. In other words, the fourth edge loss may include adding the edge loss $L1_{4-1}$ and the edge loss $L1_{4-2}$. The fourth edge loss $L1_4$ may include a weighted sum of the edge loss $L1_{4-1}$ and the edge loss $L1_{4-2}$ (formula (16)), wherein $B1$ and $B2$ are the respective weighing factors:

$$L1_4 = B1\,L1_{4-1} + B2\,L1_{4-2}. \qquad (16)$$

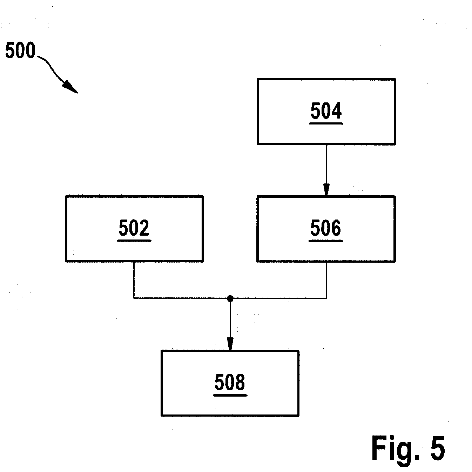

**FIG. 5** shows a method 500 of training a generative model according to various embodiments. The method 500 may include generating a first edge image 212 for a digital image 106 (in 502). The first edge image 212 may be generated by an edge detection neural network 210 and may be based on the digital image 106. The digital image 106 may include at least one object 202. The first edge image 212 may include first edge data. The first edge data may represent edges of the at least one object 202 in the digital image 106. The first edge data may further represent edges within the at least one object 202 in the digital image 106. The method 500 may include generating a synthetic image 208 by a generative model 206 (in 504). The synthetic image 208 may include a synthetic version of the at least one object 202. The method 500 may further include generating a second edge image 214 for the synthetic image 208 (in 506). The second edge image 214 may be generated by the edge detection neural network 210 and may be based on the synthetic image 208. The second edge image 214 may include second edge data. The second edge data may represent edges of the synthetic version of the at least one object 202 in the synthetic image 208. The second edge data may further represent edges within the synthetic version of the at least one object 202 in the synthetic image 208. The method 500 may further include adapting the generative model 206 (in 508). The generative model 206 may be adapted based on an output provided by the edge detection neural network 210 based on the digital image 106 and an output provided based on the synthetic image 208. The generative model 206 may be adapted based on the first edge image 212 and the second edge image 214.

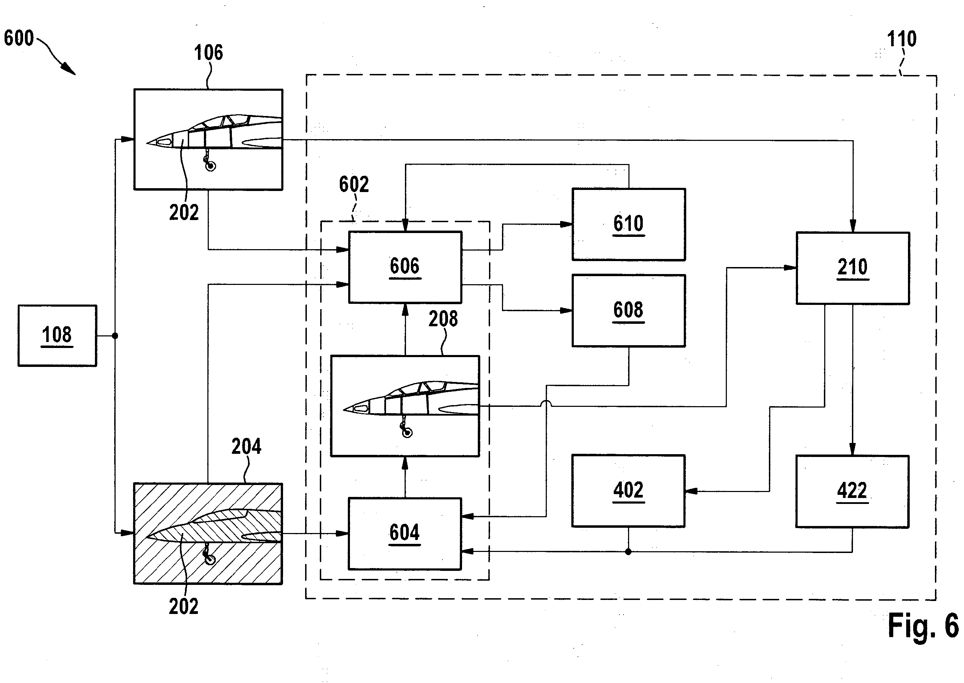

**FIG. 6** shows a processing system 600 for training a generative adversarial network according to various embodiments. The processing system 600 may include the memory device 108, wherein the memory device 108 may store the digital image 106 and the label image 204. The processing system 600 may further include the at least one processor 110. The processor 110 may implement at least a part of a generative adversarial network 602. The generative adversarial network 602 may include a generator 604. The generator 604 may be configured to generate a synthetic image 208. The synthetic image 208 may include a synthetic version of the at least one object 202 shown in the digital image 106. The generator 604 may be configured to process the label image 204 and to generate the synthetic image 208 based on the label image 204. The generator 604 may generate the synthetic image 208 based on the label image 204 and a random noise vector. The generative adversarial network 602 may further include a discriminator 606. The discriminator 606 may be configured to process the digital image 106, the label image 204, and the synthetic image 208. The discriminator 606 may be configured to determine a generator loss 608 and a discriminator loss 610 based on the digital image 106, the label image 204, and the synthetic image 208. The processor 110 may be configured to adapt the discriminator 606 based on the discriminator loss 610.

The processor 110 may be further configured to implement at least a part of the edge detection neural network 210. The edge detection neural network 210 may be configured to process the digital image 106. The edge detection neural network 210 may be configured to provide the first edge detection output 402 based on the digital image 106. The edge detection neural network 210 may be further configured to process the synthetic image 208. The edge detection neural network 210 may be configured to provide the second edge detection output 422 based on the synthetic image 208. The processor 110 may be configured to determine the first edge loss ($L_{BCE1}$), the second edge loss ($L_{BCE2}$), the third edge loss ($L1_3$), and/or the fourth edge loss ($L1_4$). The processor 110 may be configured to adapt the generator 604 based on the generator loss 608 and based on the first edge loss, the second edge loss, the third edge loss, or the fourth edge loss.

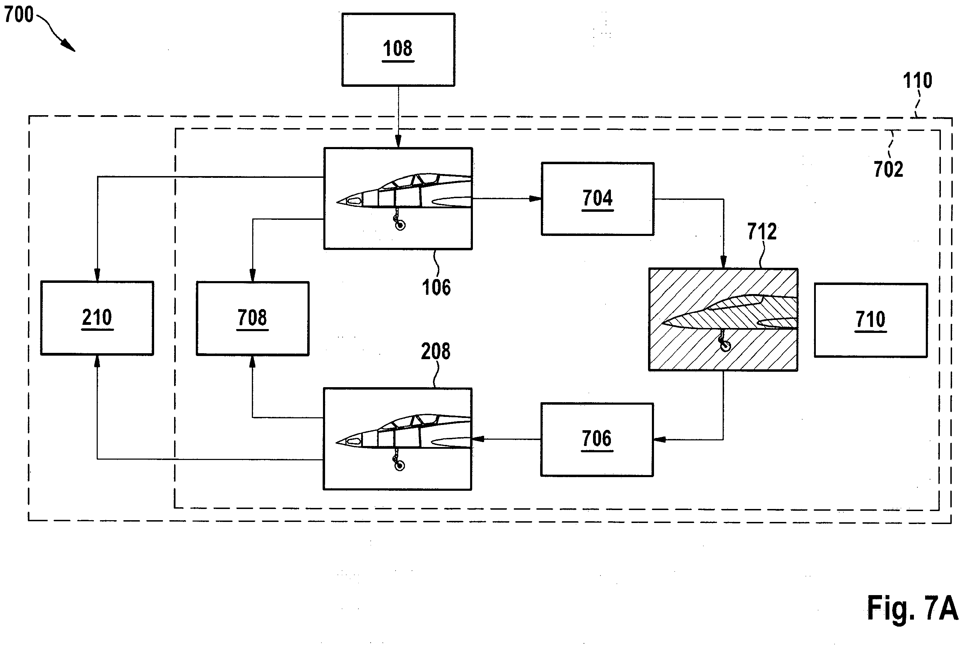

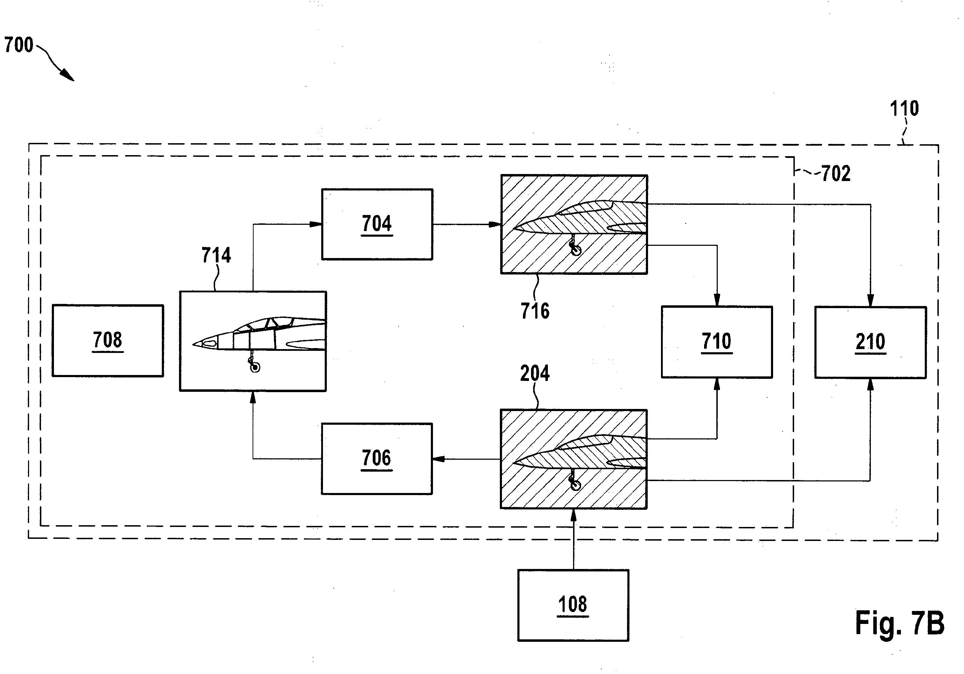

**FIG. 7A** and **FIG. 7B** show a processing system 700 for training a cycle consistent generative adversarial network according to various embodiments. As shown in FIG. 7A, the processing system 700 may include the memory device 108, wherein the memory device 108 may store the digital image 106. The processing system 700 may include the at least one processor 110. The processor 110 may be configured to implement at least a part of a cycle consistent generative adversarial network (CycleGAN) 702. The CycleGAN 702 may include a first generator 704. The first generator 704 may be configured to generate a label image based on a digital image or a synthetic image. The first generator 704 may be configured to process the digital image 106. The first generator 704 may be configured to generate the second label image 712 based on the digital image 106. The second label image 712 may include a segmentation of the digital image 106. The second label image 712 may include a segmentation of the at least one object 202 in the digital image 106. The CycleGAN 702 may include a second generator 706. The second generator 706 may be configured to generate a synthetic image based on a label image. The second generator 706 may be configured to generate a synthetic image 208. The second generator 706 may be configured to generate the synthetic image 208 based on the second label image 712. The synthetic image 208 may include a synthetic version of the at least one object 202. The synthetic image 208 may be a reconstruction of the digital image 106.

The CycleGAN 702 may further include a first discriminator 708. The first discriminator 708 may be configured to process digital images and/or synthetic images. The first discriminator 708 may be configured to process the digital image 106 and the synthetic image 208. The first discriminator 708 may be configured to determine a first discriminator loss and a first cycle consistent loss based on the digital image 106 and the synthetic image 208.

The processor 110 may be configured to implement at least a part of the edge detection neural network 210. The edge detection neural network 210 may be configured to process the digital image 106 and to provide the first edge detection output 402. The edge detection neural network 210 may be further configured to process the synthetic image 208 and to provide the second edge detection output 422.

As shown in FIG. 7B, the memory device may further store a label image, such as the label image 204. According to various embodiments, the label image 204 includes a segmentation of at least one object, wherein the at least one object may be different from the at least one object 202 shown in the digital image 106. The second generator 706 may be configured to process the label image 204 and to generate a second synthetic image 714 based on the label image 204. The second synthetic image 714 may include a synthetic version of the segmented version of the at least one object in the label image 204. The first generator 704 may be configured to process the second synthetic image 714 and to generate a third label image 716 based on the second synthetic image 714. The third label image 716 may include a segmented version of the synthetic version of the at least one object in the second synthetic image 714. The third label image 716 may be a reconstruction of the label image 204.

The CycleGAN 702 may further include a second discriminator 710. The second discriminator 710 may be configured to process label images. The second discriminator 710 may be configured to process the label image 204 and the third label image 716. The second discriminator 710 may be configured to determine a second discriminator loss and a second cycle consistent loss based on the label image 204 and the third label image 716.

The edge detection neural network 210 may be further configured to process a label image and to provide an edge detection output. The edge detection neural network 210 may be configured to process the label image 204 and to provide a third edge detection output, wherein the third edge detection output may correspond substantially to the first edge detection output 402 and the second edge detection output 422. In other words, the third edge detection output may include a first side output, a second side output, a modified second side output, a third fused output, a first side edge image, a second side edge image, and a third edge image. The third edge image may include third edge data representing edges of the at least one object in the label image 204. The third edge data may further represent edges within the at least one object in the label image 204. The edge detection neural network 210 may be further configured to process the third label image 716 and to provide a fourth edge detection output, wherein the fourth edge detection output may correspond substantially to the first edge detection output 402, the second edge detection output 422, and the third edge detection output. In other words, the fourth edge detection output may include a first side output, a second side output, a modified second side output, a fourth fused output, a first side edge image, a second side edge image, and a fourth edge image. The fourth edge image may include fourth edge data representing edges of the at least one object in the third label image 716. The fourth edge data may further represent edges within the at least one object in the third label image 716.

The processor 110 may be configured to determine the first edge loss ($L_{BCE1}$), the second edge loss ($L_{BCE2}$), the third edge loss ($L1_3$), and/or the fourth edge loss ($L1_4$) based on the first edge detection output 402 and the second edge detection output 422. The processor 110 may be further configured to determine the respective edge loss of the first edge loss ($L_{BCE1}$), the second edge loss ($L_{BCE2}$), the third edge loss ($L1_3$), or the fourth edge loss ($L1_4$) based on the third edge detection output and the fourth edge detection output.

The processor 110 may be configured to adapt the first discriminator 708 based on the first discriminator loss. The processor 110 may be configured to adapt the second discriminator 710 based on the second discriminator loss. The processor 110 may be configured to adapt the first generator 704 based on the second cycle consistent loss and based on the first edge loss, the second edge loss, the third edge loss, or the fourth edge loss determined based on the third edge detection output and the fourth edge detection output. The processor 110 may be configured to adapt the second generator 706 based on the first cycle consistent loss and based on the first edge loss, the second edge loss, the third edge loss, or the fourth edge loss determined based on the first edge detection output 402 and the second edge detection output 422.

The processor 110 may be configured to determine a cycle consistent edge loss. The cycle consistent edge loss may be determined based on the edge loss (i.e. the first edge loss, the second edge loss, the third edge loss, or the fourth edge loss) determined based on the first edge detection output 402 and the second edge detection output 422 and based on the edge loss determined based on the third edge detection output and the fourth edge detection output. The cycle consistent edge loss may be the sum of the edge loss determined based on the first edge detection output 402 and the second edge detection output 422 and the edge loss determined based on the third edge detection output and the fourth edge detection output. The processor 110 may be configured to adapt the first generator 704 and the second generator 706 based on the cycle consistent edge loss.

According to various embodiments, the CycleGAN 702 is configured to process a plurality of digital images and a plurality of label images, wherein the plurality of digital images and the plurality of label images may not be correlated. The processor 110 may be configured to adapt the CycleGAN 702 for each digital image of the plurality of digital images and for each label-image of the plurality of label images as described above. This has the effect, that the CycleGAN 702 can be trained for unpaired images, i.e. an unpaired label to image translation.

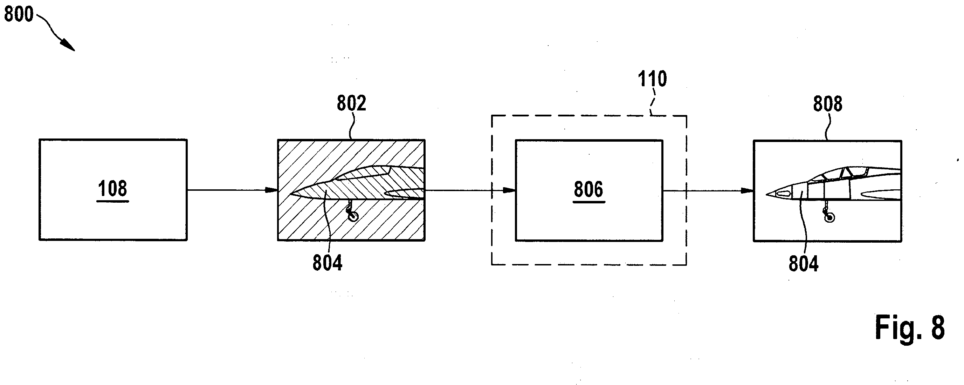

**FIG. 8** shows a processing system 800 for using a trained generative model according to various embodiments. The processing system 800 may include the memory device 108, wherein the memory device 108 may store a label image 802. The label image 802 may include a segmentation of at least one object 804. The processing system may further include the at least one processor 110. The processor 110 may be configured to implement at least a part of a generative model 806, wherein the generative model 806 was trained by the method 500 of training a generative model. The generative model 806 may correspond substantially to the generative model 206, to the generative adversarial network 602, or to the CycleGAN 702. The trained generative model 806 may be configured to process the label image 802 and to generate a synthetic image 808. The synthetic image 808 may include a synthetic version of the segmented version of the at least one object 804 in the label image 802. The synthetic image 808 may represent edges of the at least one object 804 in the label image 802. The synthetic image 808 may further represent edges within the at least one object 804 in the label image 802.

Illustratively, the trained generative model 806 may be configured to generate training data (e.g. the synthetic image 808) to train another model such as another neural network. This allows a simplified and cost-reduced training of a neural network using the improved synthetic training data generated by the generative model (e.g. 806).

The thus trained other model may then be configured to provide image processing, such as object segmentation and/or object recognition (e.g. for the recognition of obstacles on a road such as other vehicles, pedestrians, or of a traffic sign, and the like). The other model may further be configured to control an actor such as an electrical and/or mechanical component of a vehicle, e.g. a steering component or a break or an accelerator of a vehicle. The vehicle may be a car, a truck, an airplane, a drone, and the like. In various embodiments, the other model may be part of a vehicle assistance system, e.g. of a car or a truck.

**Claims**

1. A method of training a generative model for generating a plurality of synthetic images, executed by one or more processors, the method comprising:

   • generating a first edge image for a digital image, the digital image comprising at least one object, the first edge image comprising first edge data representing edges of the at least one object in the digital image;
   • a generative model generating a synthetic image comprising a synthetic version of the at least one object;
   • generating a second edge image for the synthetic image, the second edge image comprising second edge data representing edges of the synthetic version of the at least one object in the synthetic image; and
   • adapting the generative model based on the first edge image and the second edge image.

2. The method of claim 1,

   • wherein the first edge image comprises first edge data representing edges within the at least one object in the digital image; and
   • wherein the second edge image comprises second edge data representing edges within the synthetic version of the at least one object in the synthetic image.

3. The method of any one of claims 1 or 2, wherein the generative model comprises a generative adversarial network, a variational autoencoder or a flow model.

4. The method of any one of claims 1 to 3, wherein the generative model generates the synthetic image based on a label image, and wherein the label image comprises a segmentation of the digital image.

5. The method of any one of claims 1 to 4, wherein the first edge image and the second edge image are generated by an edge detection neural network.

6. The method of claim 5, wherein generating a first edge image comprises:

   • generating a first edge detection output by the edge detection neural network based on the digital image;
   • generating the first edge image based on the first edge detection output.

7. The method of any one of claims 5 or 6, wherein generating a second edge image comprises:

   • generating a second edge detection output by the edge detection neural network based on the synthetic image;
   • generating the second edge image based on the second edge detection output using the sigmoid function.

8. The method of any one of claims 1 to 7, wherein the generative model comprises a generative adversarial network, comprising a generator and a discriminator, and wherein the method further comprises:

   • determining a generator loss and a discriminator loss based on the digital image and the synthetic image;
   • adapting the generator based on the generator loss and based on the first edge loss, the second edge loss, the third edge loss, or the fourth edge loss;
   • adapting the discriminator based on the discriminator loss.

9. The method of any one of claims 1 to 7, wherein the generative model comprises a cycle consistent generative adversarial network (CycleGAN), wherein the synthetic image is a reconstruction of the digital image, and wherein the method further comprises:

   • generating a third edge image for a second label image, the second label image comprising at least one object, the third edge image comprising third edge data representing edges of the at least one object in the second label image;
   • the generative model generating a third label image, wherein the third label image is a reconstruction of the second label image;
   • generating a fourth edge image for the third label image, the fourth edge image comprising fourth edge data representing edges of the at least one object in the third label image; and
   • adapting the generative model based on the third edge image and the fourth edge image.

**10.** The method of any one of claims 1 to 9, further comprising: the generative model generating training data.

**11.** The method of claim 10, further comprising: training a further model using the training data generated by the generative model.

**12.** The method of claim 11, further comprising: the trained generative model controlling an actor.

**13.** A computer program comprising program instructions configured to, if executed by one or more processors, perform the method of any one of claims 1 to 12.

**14.** An image processing device, configured to perform the method of any one of claims 1 to 12.

**15.** An image processing device, comprising a generative model trained by the method of any one of claims 1 to 12.

Fig. 1

EP 3 767 590 A1

Fig. 2

Fig. 3

400A

106

402

110

210

404 → 410 ← 408 ← 406

412

212

208

202

414

108

206

214

424 → 430 ← 428 ← 426

432

434

204

202

202

422

**Fig. 4A**

EP 3 767 590 A1

400B

106

402

110

202

210

404 410 408 406

208

412

414

108

212

204

206

214

202

432 434

424 430 428 426

422

**Fig. 4B**

Fig. 4C

Fig. 4D

500

504

502          506

508

Fig. 5

EP 3 767 590 A1

Fig. 6

Fig. 7A

Fig. 7B

Fig. 8

Europäisches
Patentamt

European
Patent Office

Office européen
des brevets

# EUROPEAN SEARCH REPORT

Application Number

EP 19 18 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Yakov Miron ET AL: "S-Flow GAN", arXiv.org, 21 May 2019 (2019-05-21), XP055649750, Retrieved from the Internet: URL:https://arxiv.org/pdf/1905.08474v1.pdf [retrieved on 2019-12-05] | 1-8, 10-15 | INV. G06T11/00 |
| Y | * abstract; figures 1,2 * <br> * sections 2.3, 3.1, 3.2 * | 9 | |
| X | YU BITING ET AL: "Ea-GANs: Edge-Aware Generative Adversarial Networks for Cross-Modality MR Image Synthesis", IEEE TRANSACTIONS ON MEDICAL IMAGING, IEEE SERVICE CENTER, PISCATAWAY, NJ, US, vol. 38, no. 7, 1 July 2019 (2019-07-01), pages 1750-1762, XP011732657, ISSN: 0278-0062, DOI: 10.1109/TMI.2019.2895894 [retrieved on 2019-06-27] | 1-4,8, 10-15 | |
| Y | * abstract; figure 3 * | 9 | |
| A | * sections III.A and IV.G * | 5-7 | TECHNICAL FIELDS SEARCHED (IPC) |
| Y,D | ZHU JUN-YAN ET AL: "Unpaired Image-to-Image Translation Using Cycle-Consistent Adversarial Networks", 2017 IEEE INTERNATIONAL CONFERENCE ON COMPUTER VISION (ICCV), IEEE, 22 October 2017 (2017-10-22), pages 2242-2251, XP033283087, DOI: 10.1109/ICCV.2017.244 [retrieved on 2017-12-22] * abstract; figure 6 * * section 3 * | 9 | G06T |

The present search report has been drawn up for all claims

| Place of search | Date of completion of the search | Examiner |
|---|---|---|
| Munich | 5 December 2019 | Krawczyk, Grzegorz |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PARK et al.** *Semantic Image Synthesis with Spatially-Adaptive Normalization,* 2019
- **ZHU et al.** *Unpaired Image-to-Image Translation using Cycle-Consistent Adversarial Networks,* 2018
- **GEIRHOS et al.** *ImageNet-trained CNNs are biased towards texture; increasing shape bias improves accuracy and robustness,* 2019
- **MANINIS et al.** *Convolutional Oriented Boundaries: From Image Segmentation to High-Level Task,* 2017
- **LIU et al.** *Richer Convolutional Features for Edge Detection,* 2017